# EUROPÄISCHE PATENTANMELDUNG

(11) **EP 2 161 475 A2**
(43) Veröffentlichungstag der Anmeldung: **10.03.2010**
(21) Anmeldenummer: 09010907.5
(22) Anmeldetag: 26.08.2009
(51) Int. Cl.: F16F 15/16

(54) **Torsionsschwingungdämpfer, insbesondere Zweimassenschwungrad**

(30) Priorität: 05.09.2008 DE 102008046147
(71) Anmelder: VOLKSWAGEN AG, 38436 Wolfsburg (DE)
(72) Erfinder: Schad, Alexander, 38173 Erkerode (DE); Pott, Ekkehard, 38518 Gifhorn (DE)

(57) **Zusammenfassung**

Die Erfindung betrifft einen Torsionsschwingungsdämpfer, insbesondere Zweimassenschwungrad zwischen der Kraftabgabewelle einer Brennkraftmaschine und einem nachgeschalteten Geschwindigkeits-Wechselgetriebe für Kraftfahrzeuge, mit einem antriebsseitigen Primärteil und einem abtriebsseitigen Sekundärteil, die begrenzt verdrehbar zueinander über eine Federungs- und Dämpfungseinrichtung miteinander gekoppelt sind, wobei die Federungs- und Dämpfungseinrichtung durch ein Gasfedersystem gebildet ist, das mehrere unter Überdruck stehende Luftkammern einerseits und diese beaufschlagende, das Volumen der Luftkammern verändernde Übertragungsmittel andererseits aufweist. Eine baulich und fertigungstechnisch günstige und an hohe Drehmomente und Drehungleichförmigkeiten gut anpassbare Konstruktion wird erzielt, indem die Luftkammern durch unter Druck stehende, elastische Federbälge (7, 8) gebildet sind, die zwischen Übertragungselementen (5, 6) des Primärteils (2) und des Sekundärteils (3) angeordnet sind.

## Beschreibung

Die vorliegende Erfindung betrifft einen Torsionsschwingungsdämpfer, insbesondere ein Zweimassenschwungrad zwischen einer Kraftabgabewelle einer Brennkraftmaschine und einem Geschwindigkeits-Wechselgetriebe für Kraftfahrzeuge, gemäß dem Oberbegriff des Patentanspruches 1.

Einen derartigen Torsionsschwingungsdämpfer bzw. ein Zweimassenschwungrad beschreibt beispielsweise die DE 10 2005 018 954 A1, wobei hier ein Dämpfungssystem mit umfangsverteilten Schraubendruckfedern mit einem Luftfederungssystem kombiniert ist. Das Luftfederungssystem ist durch zwei ringförmig angeordnete Luftkammern im Primärteil gebildet, in die entsprechend gekrümmt ausgeführte Kolbenstangen mit jeweils einem Kolben eintauchen, die wiederum mit dem Sekundärteil des Zweimassenschwungrades verbunden sind. Die Federungs- und Dämpfungseigenschaften zur Vermeidung von zum Beispiel Resonanzschwingungen können durch eine druckveränderliche Beaufschlagung der Luftkammern beeinflusst werden.

Aufgabe der Erfindung ist es, einen Torsionsschwingungsdämpfer der gattungsgemäßen Art vorzuschlagen, der baulich und fertigungstechnisch besonders einfach aufgebaut ist, der mit wenig Verlustreibung behaftet ist und der in einer großen Bandbreite an gegebene Motorleistungen anpassbar ist.

Diese Aufgabe wird erfindungsgemäß mit den kennzeichnenden Merkmalen des Patentanspruches 1 gelöst. Vorteilhafte und zweckmäßige Weiterbildungen der Erfindung sind in den Unteransprüchen angeführt.

Erfindungsgemäß wird vorgeschlagen, dass die Luftkammern durch autark unter Druck stehende, elastische Federbälge gebildet sind, die zwischen Übertragungselementen des Primärteils und des Sekundärteils angeordnet sind. Die Federbälge sind in ihrer Eigenelastizität, Volumengröße, Befüllung mit Gas, etc. individuell auf zu übertragende Drehmomente und auf geforderte Federungs- und Dämpfungseigenschaften konstruktiv gezielt auslegbar und wirken nahezu verlustfrei, da keine Gleitflächen zwischen Primärteil und Sekundärteil wie Kolbenführungen, etc. vorhanden sind. Ferner können das Primärteil und das Sekundärteil baulich einfach ausgeführt sein, wobei lediglich Aufnahmeräume für die Federbälge und geeignete Übertragungselemente vorzusehen sind.
Insbesondere können die Federbälge zwischen alternierend radial nach innen und außen von dem Primärteil und dem Sekundärteil abragenden Zwischenwänden angeordnet sein, die entsprechend in Umfangsrichtung zueinander versetzt angeordnet sind.

Des Weiteren können das Primärteil und das Sekundärteil unter Bildung eines Ringraumes ineinander angeordnet sein, wobei sich die Zwischenwände radial nach außen bis zum Innenumfang einerseits und radial nach innen bis zum Außenumfang andererseits von Primärteil und Sekundärteil erstrecken. Die Zwischenwände bilden somit bei einer fertigungstechnisch einfachen Gestaltung als Radialwände Aufnahmeräume für die Federbälge, wobei diese Aufnahmeräume unterschiedlich groß sein können und dementsprechend gezielte Anpassungen an die gewünschten Federungs- und Dämpfungseigenschaften ermöglichen.

Ferner können zu einer vorteilhaften Auslegung der Federungs- und Dämpfungseigenschaften alternierend Federbälge unterschiedlicher Federsteifigkeit und/oder Volumina vorgesehen sein. Zudem können die Federbälge mit einem großmolekularem Gas befüllt sein, um deren Druckvorspannung über einen langen Zeitraum sicherzustellen.

In besonders zweckmäßiger Auslegung und zur wirkungsvollen Dämpfung großer Drehungleichförmigkeiten von Brennkraftmaschinen können über den Umfang des Ringraumes zwischen Primärteil und Sekundärteil sechs Federbälge vorgesehen sein, die zwischen jeweils drei radial nach innen und radial nach außen verlaufenden Zwischenwänden des Primärteiles und des Sekundärteiles gehalten sind. Dies reduziert die Belastung der einzelnen Federbälge und stellt eine hohe Dauerbelastbarkeit sicher.

In besonders vorteilhafter Weiterbildung der Erfindung können zwischen einander benachbarten Federbälgen Drosselelemente eingeschaltet sein, die ein Überströmen von Gas bei Druckunterschieden zulassen und somit in erhöhtem Maße eine Dämpfung der auftretenden Drehschwingungen bei baulich geringem Mehraufwand ermöglichen.

Die Drosselelemente können in fertigungstechnisch einfacher Weise durch Überströmröhrchen gebildet sein, die jeweils in Zwischenwände des Pimärteiles oder des Sekundärteiles eingesetzt sind und die einander benachbarte Federbälge strömungstechnisch miteinander verbinden.

Dabei kann in einer einfacheren Ausführung jeweils ein in beide Richtungen durchgängiges Überströmröhrchen zwischen einander benachbarten Federbälgen vorgesehen sein, das somit eine in Druckrichtung und Zugrichtung gleiche Dämpfung der Drehschwingungen ergibt.

Bevorzugt können jedoch die Drosselelemente jeweils durch zwei Überströmröhrchen unterschiedlichen Querschnittes gebildet sein, die durch eingesetzte Ventilelemente jeweils nur in einer Richtung durchgängig sind, wobei die Durchströmrichtungen entgegengesetzt sind. Damit wird in vorteilhafter Weise eine in Druckrichtung und Zugrichtung unterschiedlich wirkende Dämpfung der Drehschwingungen erzielt, die eine besonders vorteilhafte Auslegung der Federungs- und Dämpfungseigenschaften des Torsionsschwingungsdämpfers unter gezielter Vermeidung von Resonanzschwingungen ermöglicht.

Dabei können ggf. die Drosselelemente derart steuerbar ausgeführt sein, dass deren Durchgängigkeit aktiv veränderbar, insbesondere sperrbar ist. Damit ist eine noch weitergehende Anpassung an verschiedene Betriebszustände der Brennkraftmaschine mit den dabei auftretenden Drehmomenten und Drehungleichförmigkeiten geschaffen. Die Drosselelemente können zum Beispiel elektrisch betätigt sein.

In einer weiteren vorteilhaften Ausgestaltung der Erfindung können in mehreren oder allen Federbälgen volumenveränderliche Körper integriert sein, die mittels eines äußeren Mediums zur Veränderung der Federstelfigkeit der betreffenden Federbälge druckveränderlich beaufschlagbar sind. So kann der Torsionsschwingungsdämpfer bei niedrigen und hohen zu übertragenden Drehmomenten in seiner Federsteifigkeit und Dämpfungswirkung in noch größerem Umfange wirksam angepasst werden.

Die volumenveränderlichen Körper können bevorzugt mittels Drucköl aus dem Druckumlauf-Schmierölsystem der Brennkraftmaschine oder einer hydraulischen Servoeinrichtung beaufschlagbar sein, wobei ein entsprechendes, hydraulisches Drucksteuerventil über ein elektronisches Motorsteuergerät angesteuert sein kann und drehzahl- und lastabhängig die Federsteifigkeit einzelner oder aller Federbälge verändert. Als weitere Medien sind aber auch Wasser oder Druckluft einsetzbar.

Ein Ausführungsbeispiel der Erfindung ist im Folgenden anhand beiliegender Skizzen näher erläutert.

Es zeigen:

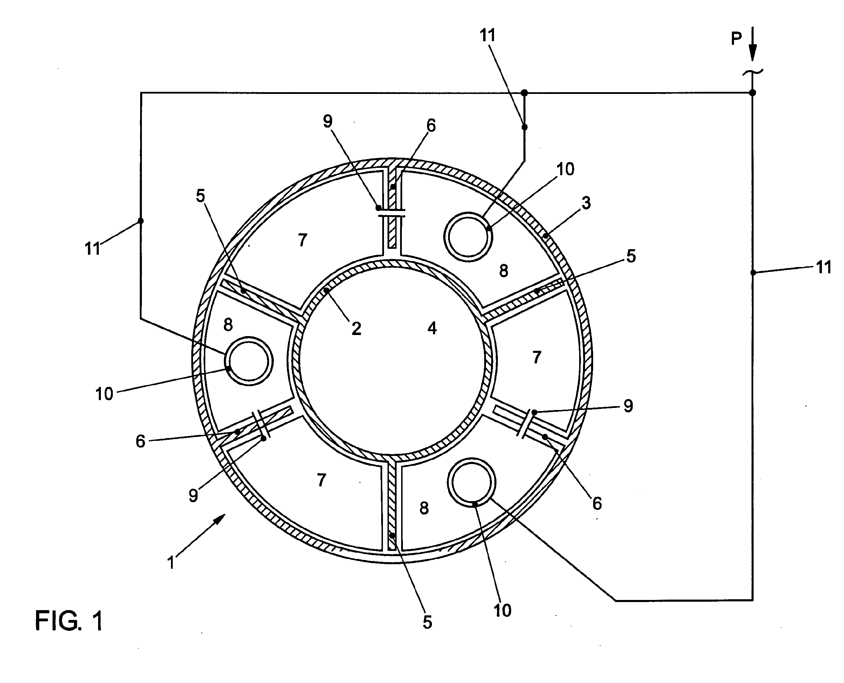

- Fig. 1: einen Querschnitt durch ein nur skizzenhaft dargestelltes Zweimassenschwungrad, das zwischen einer Kraftabgabewelle einer Brennkraftmaschine und einem Geschwindigkeits-Wechselgetriebe angeordnet sein kann und zwischen einem Primärteil und einem Sekundärteil mehrere elastische Federbälge aufweist, deren Federsteifigkeit und Dämpfungswirkung durch integrierte, volumenveränderliche Körper und durch Überströmelemente gezielt steuerbar ist; und

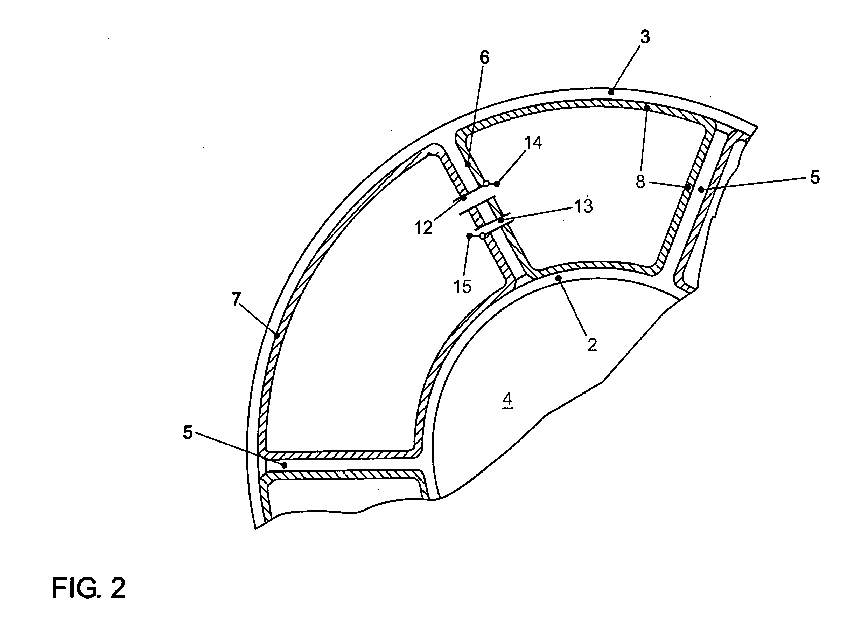

- Fig. 2: ein nur teilweise dargestellter Querschnitt durch das Zweimassenschwungrad nach Fig. 1, jedoch mit zwei unterschiedliche Durchströmquerschnitte aufweisenden Überströmelementen, die in einander entgegengesetzten Richtungen durchgängig sind.

Der Torsionsschwingungsdämpfer bzw. das Zweimassenschwungrad 1 setzt sich aus einem nabenförmigen Primärteil 2 und einem topfförmigen, das Primärteil 2 umschließenden Sekundärteil 3 zusammen.

Das Primärteil 2 ist in nicht näher dargestellter Weise über einen Radialflansch 4 an die Kraftabgabewelle bzw. Kurbelwelle einer Brennkraftmaschine angeschlossen.

Das Sekundärteil 3 mit seiner Tilgermasse ist relativ zum Primärteil 2 drehbar auf dem Primärteil 2 gelagert (nicht dargestellt) und ist abtriebsseitig über eine nachgeschaltete Trennkupplung mit der Eingangswelle eines Geschwindigkeits-Wechselgetriebes des Kraftfahrzeuges trieblich verbunden.

Von der Umfangswand des nabenförmigen Primärteiles 2 ragen drei Zwischenwände 5 radial nach außen und liegen drei weiteren Zwischenwänden 6 gegenüber, die radial nach innen von der Umfangswand des Sekundärteiles 3 abragen.

Die Zwischenwände 5, 6 erstrecken sich jeweils bis nahe der jeweils anderen Umfangswand und bilden zwischen sich Aufnahmeräume, die im Längsschnitt betrachtet quadratisch oder rechteckförmig gestaltet sind. In den Aufnahmeräumen sind gummielastische, gasdicht ausgeführte Federbälge 7 und 8 definierten Volumens angeordnet (siehe Fig. 2, in Fig. 1 nur angedeutet).

Die Federbälge 7 und 8 sind mit einem unter Druck stehenden, großmolekularen Gas, zum Beispiel Stickstoff, befüllt und wirken im wesentlichen autark, das heißt ohne zusätzliche Druckbeaufschlagung. Die Federbälge 7, 8 sind so ausgeführt, dass sie bei einem Durchmesser von 300mm oder kleiner des Zweimassenschwungrades 1 Schwingungsamplituden von bis zu 15mm zulassen. Die Federbälge 7, 8 können an den Umfangswänden von Primärteil 2 und Sekundärteil 3 anliegen (vergleiche Fig. 2) oder definierte Abstände dazu aufweisen.

Die Zwischenwände 5 und 6 sind der Einfachheit halber als geradlinig verlaufende Flügel dargestellt, sie können aber auch so geformt sein, dass sie die Federsteifigkeit der Federbälge 7 und 8, die unter anderem durch deren Volumen, Wandstärken, Druckvorspannung, Außengeometrie, etc. definiert ist, mit beeinflussen, zum Beispiel durch progressiv zunehmende Flächenbeaufschlagung.

Zwischen jeweils zwei benachbarten Federbälgen 7 und 8 sind in den Zwischenwänden 6 des Sekundärteiles 3 Drosselelemente bzw. Überströmröhrchen 9 definierten Durchströmquerschnittes eingesetzt, die wie ersichtlich jeweils zwei Federbälge 7, 8 bzw. deren Gasvolumen zur Schaffung einer zusätzlichen Schwingungsdämpfung der auftretenden Drehschwingungen zwischen Primärteil 2 und Sekundärteil 3 miteinander verbinden. Dabei kann das unter Druck stehende Gas jeweils von den momentan stärker belasteten Federbälgen zu den weniger belasteten Federbälgen überströmen.

Des weiteren sind in den den Federbälgen 7 jeweils benachbarten Federbälgen 8 volumenveränderliche Körper 10 integriert, die zum Beispiel aus einem gummielastischen Material gefertigt sind und die über Druckleitungen 11 mit einem äußeren Medium bzw. einer mit einem Druck P beaufschlagbaren Hydraulikflüssigkeit einer Servoeinrichtung des Kraftfahrzeuges verbunden sind.

Die Servoeinrichtung kann bevorzugt eine hydraulische Servolenkung oder das Druckumlauf-Schmiersystem der Brennkraftmaschine sein, wobei dieser Druck P nach Maßgabe betriebsspezifischer Parameter über ein elektronisches Steuergerät, zum Beispiel dem Motorsteuergerät, und über ein hydraulisches Steuerventil (zum Beispiel ein Taktventil, nicht dargestellt) dem volumenveränderlichen Körpern 10 zugeleitet wird.

Durch entsprechende Druckbeaufschlagung der Körper 10 werden diese aufgebläht und erhöhen demzufolge die Druckvorspannung bzw. die Federsteifigkeit der Federbälge 8. Damit kann in vorteilhafter Weise bei höheren zu übertragenden Drehmomenten und/oder bei Resonanzschwingungen mit ggf. unzulässigen Schwingungsamplituden das Federungs- und Dämpfungsverhalten des Zweimassenschwungrades 1 verändert bzw, dessen Schwingungskennlinien gezielt verschoben werden. Ggf. können auch in den Federbälgen 7 entsprechende volumenveränderliche Körper 10 vorgesehen sein.

Es versteht sich, dass die nur schematisch eingezeichneten Druckleitungen 11 bzw. die Druckmittelzufuhr über die Drehlagerungen und Wellenanschlüsse mit entsprechenden Kanälen in den Flanschbereichen des Zweimassenschwungrades 1 auszuführen sind.

Die Fig. 2 zeigt nur einen Ausschnitt des Zweimassenschwungrades 1 gemäß Fig. 1, bei dem als Drosselelemente zwischen jeweils benachbarten Federbälgen 7 und 8 zwei Überströmröhrchen 12, 13 unterschiedlichen Durchströmquerschnittes in die Zwischenwände 6 eingesetzt sind.

Die Überströmröhrchen 12, 13 weisen jeweils ein Ventilelement 14, 15 in Form einer elastischen Klappe auf, die im Normalzustand geschlossen sind und die bei einer Beaufschlagung mit höherem Gasdruck öffnen. Die Ventilelemente 14, 15 wirken als Rückschlagventile, die jeweils nur in einer Richtung öffnen bzw. durchgängig sind.

Wie aus der Fig. 2 ersichtlich ist, sind die Ventilelemente 14, 15 so versetzt zueinander angeordnet, dass deren Durchströmrichtung entgegengesetzt ist. Somit strömt bei einem Druckunterschied Gas zum Beispiel vom Federbalg 7 durch einen größeren Durchströmquerschnitt und damit verbunden mit niedrigerer Federsteifigkeit und geringerer Dämpfungswirkung in den Federbalg 8 über, während im umgekehrten Falle ein Druckausgleich mit höherer Federsteifigkeit und größerer Dämpfungswirkung über das im Durchströmquerschnitt kleinere Überströmröhrchen 13 bei offener Ventilklappe 15 stattfindet.

Dementsprechend können in einfacher Weise unterschiedliche Kennwerte in Druckrichtung (Antriebsrichtung) und Zugrichtung (Schleppmoment) eingestellt werden.

Die Erfindung ist nicht auf das beschriebene Ausführungsbeispiel beschränkt. Beispielsweise können die Drosselelemente 9 oder 12, 13 auch aktiv steuerbar ausgeführt sein, wobei diese bevorzugt elektrisch oder elektromagnetisch betätigte Ventilelemente aufweisen können.

Ggf, kann das pneumatische Federungs- und Dämpfungssystem mit den eingesetzten Federbälgen 7, 8 auch mit einem Schraubenfeder-Dämpfungssystem wie bei Zweimassenschwungrädem vielfach bekannt kombiniert sein.

Anstelle eines Zweimassenschwungrades 1 kann der Torsionsschwingungsdämpfer auch in anderen Anwendungsfällen mit Drehungleichförmigkeiten im Antriebssystem wirksam eingesetzt sein.

### Bezugszeichenliste

- 1: Torsionsschwingungsdämpfer bzw. Zweimassenschwungrad
- 2: Primärteil
- 3: Sekundärteil
- 4: Radialflansch
- 5: Zwischenwände
- 6: Zwischenwände
- 7: Federbälge
- 8: Federbälge
- 9: Überströmröhrchen
- 10: Volumenveränderliche Körper
- 11: Druckleitungen
- 12: Überströmröhrchen
- 13: Überströmröhrchen
- 14: Ventilklappe
- 15: Ventilklappe

## Patentansprüche

1. Torsionsschwingungsdämpfer, insbesondere Zweimassenschwungrad zwischen der Kraftabgabewelle einer Brennkraftmaschine und einem nachgeschalteten Geschwindigkeits-Wechselgetriebe für Kraftfahrzeuge, mit einem antriebsseitigen Primärteil (2) und einem abtriebsseitigen Sekundärteil (3), die begrenzt verdrehbar zueinander über eine Federungs- und Dämpfungseinrichtung miteinander gekoppelt sind, wobei die Federungs- und Dämpfungseinrichtung durch ein Gasfedersystem gebildet ist, das mehrere unter Überdruck stehende Luftkammern einerseits und diese beaufschlagende, das Volumen der Luftkammern verändernde Übertragungsmittel andererseits aufweist, **dadurch gekennzeichnet, dass** die Luftkammern durch unter Druck stehende, elastische Federbälge (7, 8) gebildet sind, die zwischen Übertragungselementen (5, 6) des Primärteils (2) und des Sekundärteils (3) angeordnet sind.

2. Torsionsschwingungsdämpfer nach Anspruch 1, **dadurch gekennzeichnet, dass** die Federbälge (7, 8) zwischen alternierend radial nach innen und außen von dem Primärteil (2) und dem Sekundärteil (3) abragenden Zwischenwänden (5, 6) angeordnet sind.

3. Torsionsschwingungsdämpfer nach einem der Ansprüche 1 oder 2, **dadurch gekennzeichnet, dass** das Primärteil (2) und das Sekundärteil (3) unter Bildung eines Ringraumes ineinander angeordnet sind, und/oder dass sich die Zwischenwände (5, 6) radial nach außen bis zum innenumfang einerseits und radial nach innen bis zum Außenumfang andererseits von Primärteil (2) und Sekundärteil (3) erstrecken.

4. Torsionsschwingungsdämpfer nach einem der vorhergehenden Ansprüche, **dadurch gekennzeichnet, dass** alternierend Federbälge (7, 8) unterschiedlicher Federsteifigkeit und/oder Volumina vorgesehen sind.

5. Torsionsschwingungsdämpfer nach einem der vorhergehenden Ansprüche, **dadurch gekennzeichnet, dass** die Federbälge (7, 8) mit einem großmolekularen Gas befüllt sind.

6. Torsionsschwingungsdämpfer nach einem der vorhergehenden Ansprüche, **dadurch gekennzeichnet, dass** über den Umfang des Ringraumes zwischen Primärteil (2) und Sekundärteil (3) sechs Federbälge (7, 8) vorgesehen sind, die zwischen jeweils drei radial nach innen und radial nach außen verlaufenden Zwischenwänden (5, 6) des Primärteiles (2) und des Sekundärteiles (3) gehalten sind.

7. Torsionsschwingungsdämpfer nach einem der vorhergehenden Ansprüche, **dadurch gekennzeichnet, dass** zwischen einander benachbarten Federbälgen (7, 8) Drosselelemente (9, 12, 13) eingeschaltet sind, die ein Überströmen von Gas bei Druckunterschieden zulassen.

8. Torsionsschwingungsdämpfer nach Anspruch 7, **dadurch gekennzeichnet, dass** die Drosselelemente durch Überströmröhrchen (9, 12, 13) gebildet sind, die vorzugsweise jeweils in Zwischenwände (5, 6) des Primärteiles (2) oder des Sekundärteiles (3) eingesetzt sind und die einander benachbarte Federbälge (7, 8) strömungstechnisch miteinander verbinden.

9. Torsionsschwingungsdämpfer nach Anspruch 8, **dadurch gekennzeichnet, dass** jeweils ein in beide Richtungen durchgängiges Überströmröhrchen (9) zwischen einander benachbarten Federbälgen (7, 8) vorgesehen sind.

10. Torsionsschwingungsdämpfer nach einem der Ansprüche 7, 8 oder 9, **dadurch gekennzeichnet, dass** die Drosselelemente jeweils durch zwei Überströmröhrchen (12, 13) unterschiedlichen Querschnittes gebildet sind, die bevorzugt durch eingesetzte Ventilelemente (14, 15) jeweils nur in einer Richtung durchgängig sind, wobei die Durchströmrichtungen entgegengesetzt sind.

11. Torsionsschwingungsdämpfer nach einem der Ansprüche 7 bis 10, **dadurch gekennzeichnet, dass** die Drosselelemente (9, 12, 13) derart steuerbar ausgeführt sind, dass deren Durchgängigkeit aktiv veränderbar, insbesondere sperrbar ist.

12. Torsionsschwingungsdämpfer nach einem der vorhergehenden Ansprüche, **dadurch gekennzeichnet, dass** in zumindest einem der Federbälge (7, 8) ein volumenveränderlicher Körper (10) integriert ist, der mittels eines äußeren Mediums zur Veränderung der Federsteifigkeit der betreffenden Federbälge (7, 8) druckveränderlich beaufschlagbar ist.

13. Torsionsschwingungsdämpfer nach Anspruch 12, **dadurch gekennzeichnet, dass** die volumenveränderlichen Körper (10) mittels Drucköl aus dem Druckumlauf-Schmierölsystem der Brennkraftmaschine oder einer hydraulischen Servoeinrichtung beaufschlagbar sind.
